(19) Europäisches Patentamt / European Patent Office / Office européen des brevets

(11) **EP 3 945 348 A1**

(12) **EUROPEAN PATENT APPLICATION**

(43) Date of publication:
**02.02.2022 Bulletin 2022/05**

(21) Application number: **20188984.7**

(22) Date of filing: **31.07.2020**

(51) International Patent Classification (IPC):
*G01S 17/89* (2020.01)     *G01S 17/894* (2020.01)
*G01S 17/86* (2020.01)     *G06N 3/08* (2006.01)

(52) Cooperative Patent Classification (CPC):
**G01S 7/4802; G01S 7/4808; G01S 17/86;
G01S 17/894; G06N 3/084; G06N 3/088**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Continental Automotive GmbH
30165 Hannover (DE)**

(72) Inventor: **Kabai, Robert-Zsolt - c/o Conti Temic
microelectronic GmbH
90411 Nürnberg (DE)**

(74) Representative: **Continental Corporation
c/o Continental Automotive GmbH
Intellectual Property
Nordostpark 30
90411 Nürnberg (DE)**

(54) **METHOD AND SYSTEM FOR DETERMINING 3D IMAGE INFORMATION**

(57)     The invention relates to a computer-implemented method for determining three-dimensional image information of a scene in the surrounding of a vehicle based on information provided by a camera and a flash LIDAR sensor.

```
┌─────────────────────────────────────────────────┐
│  Receiving image information from the camera      │ ─ S10
└─────────────────────────────────────────────────┘
                        │
                        ▼
┌─────────────────────────────────────────────────┐
│ Receiving depth information from the flash LIDAR sensor │ ─ S11
└─────────────────────────────────────────────────┘
                        │
                        ▼
┌─────────────────────────────────────────────────┐
│ Establishing depth prediction information based on a │ ─ S12
│ trained neural network using said image information and │
│ said depth information                             │
└─────────────────────────────────────────────────┘
                        │
                        ▼
┌─────────────────────────────────────────────────┐
│ Providing three-dimensional image information based on │ ─ S13
│ depth prediction information                       │
└─────────────────────────────────────────────────┘
```

Fig. 5

EP 3 945 348 A1

**Description**

The present invention relates generally to the field of neural networks, specifically deep neural networks. More specifically, the invention relates to a method and a system for determining 3D image information of a scene in the surrounding of the vehicle. Said 3D image information may be preferably used for deciding if a detected object can be traversed by the vehicle or not.

Emergency Braking and Obstacle Detection for autonomous driving is a critical function that is usually based on camera-only information. Using a low resolution LIDAR (LIDAR: light detection and ranging) for the task is rather difficult as it is very difficult to decide the objectness of a region inside a scene with only a few laser points.

Camera based solutions lack the power and robustness to identify rare objects and distinguish between flat objects that are safe to drive through and objects that cannot be traversed by the vehicle and therefore emergency braking is necessary.

Multi-sensor setups usually use late fusion e.g. camera and radar or concatenation based fusion approaches. The performance of the results are capped by information received from the individual sensors. Camera based object detection lacks distance information; LIDAR based object detection performs poorly in case of a low resolution LIDAR sensor, radars fail to detect non-metallic objects, while fusion-based methods are yet very primitive and usually involve simple concatenation of features either early in the learning chain, called early-fusion or using a voting scheme for per-sensor predictions, called late fusion.

It is an objective of the embodiments of the invention to provide a method for determining 3D image information which provides a highly reliable detection of 3D information of objects in the surrounding scene. The objective is solved by the features of the independent claims. Preferred embodiments are given in the dependent claims. If not explicitly indicated otherwise, embodiments of the invention can be freely combined with each other.

According to an aspect, the invention refers to a method for determining 3D image information of a scene in the surrounding of a vehicle based on information provided by a camera and a flash LIDAR sensor. The method comprises the following steps:

First, image information from the camera is received, said image information referring to a first coverage area. The camera may be a digital camera providing image information in a pixelated manner in multiple channels, e.g. one channel for each color of colors RGB. The camera may be a monocular camera.

Furthermore, depth information from the flash LIDAR sensor is received, said depth information referring to a second coverage area being smaller than said first coverage area, wherein said first and second coverage areas are overlapping with each other. Preferably, the second coverage area is fully included in the first coverage area. Most preferably, the center of second coverage area is arranged in the center of first coverage area.

Based on said image information and said depth information received from flash LIDAR sensor, depth prediction information is established by a trained neural network. Said depth prediction information covers said first coverage area.

The neural network receives said image information from the camera and said depth information from the flash LIDAR sensor and provides depth prediction information covering first coverage area by combining information provided by a supervised algorithm and self-supervised algorithm executed by said neural network.

Said trained neural network comprises coefficients being chosen by considering supervised scene structure loss associated with said supervised algorithm and self-supervised scene structure loss associated with said self-supervised algorithm during a training phase such that deviations between depth predictions provided by self-supervised algorithm and depth predictions provided by supervised algorithm are reduced. Said supervised algorithm may provide depth predictions for second coverage area and said self-supervised algorithm may provide depth predictions for first coverage area. By considering self-supervised scene structure loss and supervised scene structure loss during training of neural network, more accurate depth predictions provided by supervised algorithm have also an effect on portions of first coverage area which does not overlap with second coverage area, i.e. portions of first coverage area, in which no depth predictions of supervised algorithm are available.

Finally, based on depth prediction information, three-dimensional image information is provided.

Said method is advantageous because by considering ground truth information provided by a flash LIDAR sensor, a depth estimation process in a limited coverage area is evaluated and information gathered in said limited coverage area is extended to depth information gathered in a greater coverage area thereby being able to supervise a depth estimation algorithm in a greater area than the limited field of view of the flash lidar sensor. Thereby, even when using a single flash lidar sensor in connection with a camera for detecting 3D-information in the surrounding of the vehicle, 3D-object detection is possible with high efficiency and high reliability.

According to an embodiment, coefficients of trained neural network are chosen such that depth information provided by self-supervised algorithm within second coverage area approaches depth information provided by supervised algorithm within said second coverage area. Thereby, depth prediction accuracy is improved also in the outer area of first coverage area which does not overlap with second coverage area.

According to an embodiment, said trained neural network comprises coefficients which are chosen such that supervised scene structure loss and self-supervised scene structure loss are simultaneously improved thereby establishing shared coefficients of neural network providing a shared optimum between supervised scene loss and self-supervised scene structure loss. By considering both loss values during neural network training, the depth prediction results of self-supervised algorithm in the overlapping portion of first and second coverage area are stretched and/or calibrated in order to meet or approach to the depth prediction results of supervised algorithm. Said stretching and/or calibrating has also an effect on the outer area of first coverage area which does not overlap with second coverage area, i.e. also depth prediction results in said outer area are improved.

According to an embodiment, said self-supervised algorithm performs a vision-only depth estimation solely based on features included in said image information or performs a depth estimation algorithm which uses solely image information from the camera in the subarea of first coverage area which does not overlap with second coverage area and which uses image information from the camera and depth information from the flash LIDAR sensor in second coverage area. For example, vision-only depth estimation may evaluate structural image information like edges, neighborhood and/or structural similarity in order to perform depth estimation solely based on visual information provided by the camera. In addition, self-supervised algorithm may, in some embodiments, use also depth information provided by the flash LIDAR sensor in order to enhance and/or calibrate self-supervised depth estimation.

According to an embodiment, said self-supervised algorithm performs depth estimation by considering information included in said image information provided by the camera using photometric loss and structural similarity. Thereby depth estimation accuracy of self-supervised algorithm can be significantly improved.

According to an embodiment, supervised algorithm predicts depth information based on said image information received from the camera and depth information provided by the flash LIDAR sensor in second coverage area. Thereby, supervised algorithm provides improved accuracy of depth prediction within said second coverage area.

According to an embodiment, the output of flash LIDAR sensor is provided through an occlusion filtering entity before concatenating the output of flash LIDAR sensor with image information provided by the camera. Thereby, it is possible to determine which surfaces and/or portions of surfaces are not visible from a certain viewpoint, specifically, from the camera's viewpoint.

According to an embodiment, the output of flash LIDAR sensor is projected to a reference plane associated with the camera based on Z-buffer-algorithm. Thereby, information provided by flash LIDAR sensor is transformed to the perspective of the camera.

According to an embodiment, the method comprises the step of determining obstacles or objects in the surrounding of the vehicle based on modified depth information and image information provided by the camera using a neural network. By using modified depth information obtained by upper-mentioned modification of self-supervised scene information based on supervised scene information, the performance and accuracy of determining obstacles or objects, specifically the 3D-shape of obstacles or objects in order to classify said obstacles or objects in traversable and non-traversable ones is significantly improved.

According to an embodiment, the step of determining obstacles or objects in the surrounding of the vehicle comprises classifying the obstacles or objects into traversable and non-traversable obstacles or objects. Thereby it is possible to decide, if the vehicle can pass a detected object without emergency braking or if the object cannot be traversed without damaging the vehicle and therefore emergency braking is required.

According to an embodiment, the step of determining obstacles or objects in the surrounding of the vehicle is additionally based on reflectance information provided the flash LIDAR sensor. Based on reflectance information it is possible to gather further information of detected objects (e.g. the size of the object, the material of the object and/or surface texture) which can be additionally considered when taking a decision if an object is traversable or not.

According to an embodiment, the neural network configured to provide depth prediction information is trained based on ground truth information provided by a flash LIDAR sensor arrangement comprising multiple flash LIDAR sensors. Based on said multiple flash LIDAR sensors, it is possible to determine ground truth information with higher resolution and/or greater coverage area, thereby having an improved data basis for training said neural network.

According to an embodiment, during training of said neural network which provides depth prediction information, pixel-wise root mean square error is calculated based on depth predictions provided by supervised algorithm and ground truth information provided by said flash LIDAR sensor arrangement. Thereby, depth predictions provided by supervised algorithm can be checked against ground truth information provided by said flash LIDAR sensor arrangement and parameters of the neural network can be adapted in order to reduce root mean square error.

According to an embodiment, during training of said neural network which provides depth prediction information, a self-supervised scene structure loss is calculated by considering photometric loss and structural similarity. More in detail, said self-supervised loss indicator is calculated by a weighted addition of photometric loss index and structural similarity index and the weighting factors are optimized during training of said neural network. Thereby, self-supervision capabilities are improved.

According to an embodiment, the further neural network configured for determining obstacles or objects in the surrounding of the vehicle based on modified depth information and image information provided by the camera is trained by reducing classification loss based on ground truth information provided by said flash LIDAR sensor arrangement or a ground truth database. More in detail, the further neural network may be trained for classifying obstacles or objects into traversable and non-traversable ones based on annotations included in ground truth information. During said training, parameters of neural network may be adapted such that classification loss between the classification result of neural network and ground truth information is reduced.

Preferably, the training of neural networks is performed in multiple steps, namely, first, training the neural network configured to provide depth prediction information and, second, training the neural network configured for determining obstacles or objects in the surrounding of the vehicle based on depth prediction information and image information.

According to a further aspect, the invention relates to a system for determining three-dimensional image information of a scene in the surrounding of a vehicle. The system comprises a camera and a flash LIDAR sensor. The system is configured to execute the steps of:

- Receiving image information from the camera, said image information referring to a first coverage area;
- Receiving depth information from the flash LIDAR sensor, the depth information referring to a second coverage area being smaller than said first coverage area, said first and second coverage areas overlapping with each other;
- Establishing depth prediction information based on a trained neural network, the trained neural network receiving said image information from the camera and said depth information from the flash LIDAR sensor and provides depth prediction information covering first coverage area by combining information provided by a supervised algorithm and self-supervised algorithm executed by said neural network, wherein said trained neural network comprises coefficients being chosen by considering supervised scene structure loss associated with said supervised algorithm and self-supervised scene structure loss associated with said self-supervised algorithm during a training phase such that deviations between depth predictions provided by self-supervised algorithm and depth predictions provided by supervised algorithm are reduced; and
- Providing three-dimensional image information based on depth prediction information.

Any upper-mentioned feature described as an embodiment of the method is also applicable as a system feature in the system according to the present disclosure.

The term "vehicle" as used in the present disclosure may refer to a car, truck, bus, train or any other crafts.

The term "LIDAR sensor" as used in the present disclosure may refer any sensor which transmits a laser beam and measures reflected portions of said laser beam in order to measure distances.

The term "flash LIDAR sensor" as used in the present disclosure may refer to a LIDAR sensor which illuminates the entire field of view with a wide diverging laser beam in a single pulse.

The term "depth information" as used in the present disclosure may refer to information regarding the distance of a certain area in the surrounding of the vehicle or sensor with respect to a certain reference point or reference plane.

The term "supervised algorithm" as used in the present disclosure may refer to an algorithm, specifically, a depth estimation algorithm which has been trained in advance based on ground truth information provided by a flash LIDAR sensor arrangement which has a higher resolution than the flash LIDAR sensor used in production vehicle.

The term "self-supervised algorithm" as used in the present disclosure may refer to an algorithm, specifically, a depth estimation algorithm which has been trained by using information included in the image for supervising the algorithm's results but does not rely on ground truth information provided by a flash LIDAR sensor arrangement which has a higher resolution than the flash LIDAR sensor used in production vehicle.

The term "supervised scene structure loss" as used in the present disclosure may refer to the output of a loss function which uses ground truth information, specifically ground truth information provided by a flash LIDAR sensor arrangement as a reference in order to determine prediction quality of depth estimation algorithm.

The term "self-supervised scene structure loss" as used in the present disclosure may refer to the output of a loss function which uses information included in the image (e.g. edges, structural similarity and/or photometric loss) in order to determine prediction quality of depth estimation algorithm.

The term "essentially" or "approximately" as used in the invention means deviations from the exact value by +/- 10%, preferably by +/- 5% and/or deviations in the form of changes that are insignificant for the function and/or for the traffic laws.

Various aspects of the invention, including its particular features and advantages, will be readily understood from the following detailed description and the accompanying drawings, in which:

Fig. 1 shows a road on/at which different obstacles or objects are arranged;

Fig. 2 schematically illustrates two different and overlapping coverage areas, wherein self-supervised scene information provided by self-supervised algorithm is available in first coverage area and supervised scene information provided by supervised algorithm is available in second coverage area;

Fig. 3 shows a block diagram of an example system for 3D scene reconstruction in a training setup for training neural networks;

Fig. 4 shows a block diagram of an example system for 3D scene reconstruction in an inference time setup; and

Fig. 5 shows a flowchart illustrating the method steps for determining three-dimensional image information of a scene in the surrounding of a vehicle based on information provided by a camera and a flash LIDAR sensor.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

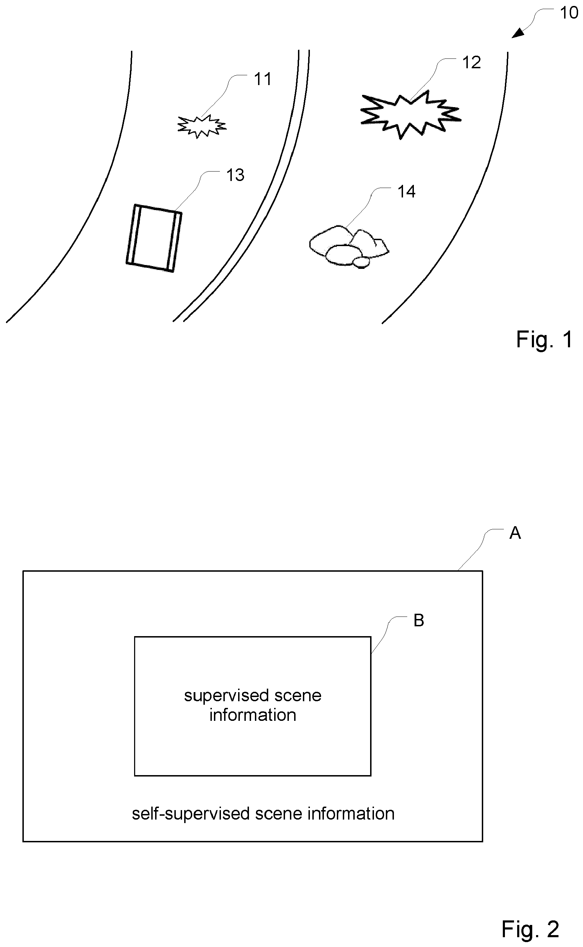

Fig. 1 illustrates a road comprising a pair of lanes. On said lanes, multiple objects are illustrated. For autonomous driving, a classification of objects, into traversable and non-traversable objects is required in order to decide if emergency braking is necessary or the vehicle can pass the object without emergency braking.

In the embodiment of Fig. 1, reference sign 11 refers to a small pothole which can be traversed by a vehicle. However, reference sign 12 refers to a greater pothole which should not be traversed because traversing may cause damages to the vehicle.

Similarly, reference sign 13 refers to a sheet of paper which can be easily traversed whereas reference sign 14 shows some rocks which may cause vehicle damages when being traversed.

In order to determine if a detected object can be traversed or not, i.e. if emergency braking is necessary or not, 3D-information of the respective object is required.

In the following, embodiments of methods and systems for determining 3D-image information based on image information of a camera and depth information provided by a flash LIDAR sensor are described. The camera and the flash LIDAR sensor may be included or attached to a vehicle in order to gather environment information in the surrounding of the vehicle.

Fig. 2 shows an example of a first coverage area A and a second coverage area B which are overlapping. The first coverage area A is associated with the camera and refers to the capturing area of said camera. So, in other words, the camera provides image information of the surrounding of the vehicle in said first coverage area A. The camera may be a high-resolution camera comprising a resolution of 1280 x 800 pixel or more. Preferably, the camera may be a monocular camera.

The second coverage area B is associated with the flash LIDAR sensor and refers to the capturing area of said flash LIDAR sensor. So, in other words, the flash LIDAR sensor provides information of the surrounding of the vehicle in said second coverage area B. The second coverage area B is smaller than the first coverage area A and overlaps with said first coverage area A. Preferably, the second coverage area B is fully included in said first coverage area A. Most preferably, the second coverage area B is centred or essentially centred with respect to the first coverage area A.

The flash LIDAR sensor simultaneously emits multiple laser beams in different directions (i.e. different azimuth and elevation angle) or a single wide-spread laser beam without using rotating elements like a rotating mirror. The flash LIDAR sensor may comprise a lower resolution than the camera, for example, a resolution of 128 x 32 dots. The flash LIDAR sensor provides information in form of a point cloud. Each point of the point cloud comprises information regarding the distance of the respective object at which the reflection occurs with respect to the flash LIDAR sensor. Said distance information, in the following also referred to as depth information, can be used for determining the 3D-structure of the scene surrounding the vehicle.

Due to the overlapping of first and second coverage area A, B, in the second coverage area B, image information of the camera as well as depth information provided by the flash LIDAR sensor is available. However, in the portion of first coverage area A which does not overlap with second coverage area B, only image information of the camera but no depth information provided by the flash LIDAR sensor is available.

Techniques are known, which enable a vision-only provision of depth information to a 2D image provided by a camera. The depth information is estimated based on a depth estimation algorithm which use structural information included in image information in order to provide depth information. Reference is made to Fangchang Ma, Guilherme Venturelli Cavalheiro, Sertac Karaman, "Self-Supervised Sparse-to-Dense: Self-Supervised Depth Completion from LiDAR and Monocular Camera", ICRA 2019, which is fully incorporated by reference and which describes a method for gathering vision-only depth information by considering change of RGB information in a pair of time frames.

Disadvantageously, the accuracy of estimated depth information solely based on image information of the camera is quite low.

In the following, an embodiment of the invention is described which uses a single neural network which implements two kinds of depth prediction algorithms, namely a supervised algorithm and self-supervised algorithm. The supervised algorithm provides depth estimation for second coverage area B, the self-supervised algorithm for first coverage area A.

In the overlapping portion of first and second coverage area A, B, different kind of depth information are available, namely, depth predictions of a supervised algorithm and depth predictions of self-supervised algorithm. Depth predictions of a supervised algorithm are more accurate and can therefore be used for improving the accuracy of depth predictions of self-supervised algorithm. More in detail, using a single trained neural network, depth predictions provided by supervised and self-supervised algorithms are combined by spatial matching said different depth information, specifically matching the centres of first and second coverage areas A, B and calibrating and/or stretching depth predictions of self-supervised algorithm such that in the overlapping part, the difference between depth predictions of supervised algorithm and depth predictions of self-supervised algorithm is minimized. Thereby, not only accuracy of depth predictions in the overlapping portion of first and second coverage area A, B but also in the non-overlapping portion of first coverage area A (i.e. the frame-like portion of first coverage area A surrounding second coverage area B) is obtained. Thereby, the accuracy of depth predictions cannot only be enhanced in the overlapping portion but also outside of overlapping portion, i.e. information of flash LIDAR sensor is also effective in areas of image information in which no information of the flash LIDAR sensor is available.

The training of supervised algorithm is based on ground truth information provided by a flash LIDAR sensor arrangement and therefore provides a higher accuracy than self-supervised algorithm. However, self-supervised algorithm provides depth prediction in a greater area, namely in first coverage area A but with lower accuracy than supervised algorithm. The neural network uses a set of coefficients (also referred to as shared coefficients) which has been chosen in a training phase such that a common optimum of the depth estimation result of the supervised algorithm as well as the self-supervised algorithm is obtained. More in detail, the shared coefficients are chosen such that the depth estimation result of self-supervised algorithm within first coverage area A approaches the depth estimation result of supervised algorithm. Thereby not only the accuracy of depth estimation of self-supervised algorithm in second coverage area B but also in the frame-like portion of first coverage area A surrounding second coverage area B is improved.

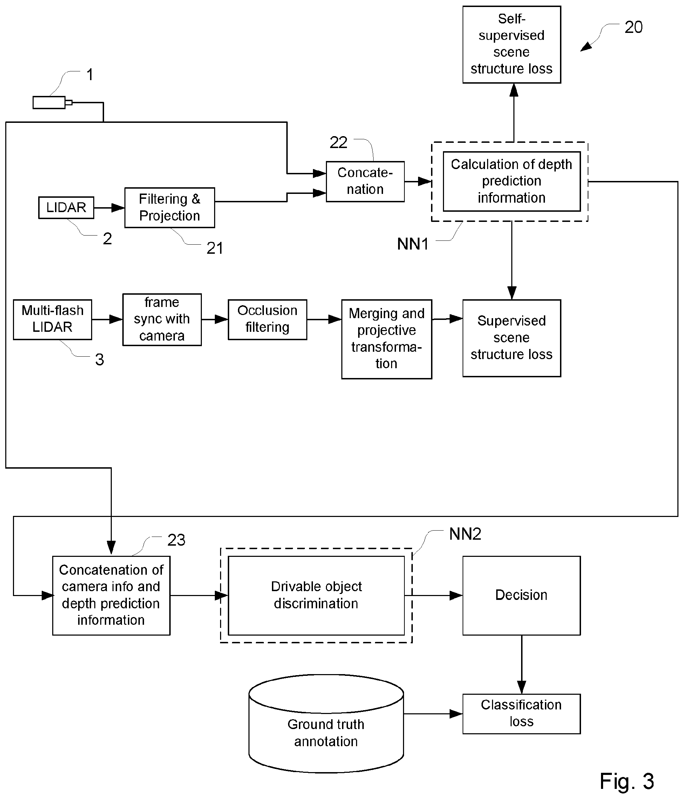

Fig. 3 shows a schematic block diagram of a system 20 for providing depth prediction information to image information of a camera 1 by combining information provided by a camera 1 and a flash LIDAR sensor 2 in training mode, i.e. for training one or more neural networks NN1, NN2 included in the system 20.

For training purposes, ground truth information is provided by a flash LIDAR sensor arrangement 3 which comprises multiple flash LIDAR sensors. Preferably, the flash LIDAR sensor arrangement 3 is configured to gather information in the same coverage area as flash LIDAR sensor 2 but with a higher resolution in order to improve the ability to reconstruct precise 3D shapes of the objects on the road. The flash LIDAR sensor arrangement 3 is used for training first neural network NN1, specifically for training supervised algorithm performed by first neural network NN1. Optionally, the coverage can be increased with additional flash LIDAR sensors or a rotating LIDAR in the training setup. In addition, the flash LIDAR sensor arrangement 3 may provide a higher resolution than flash LIDAR sensor 2. It is worth mentioning that, in preferred embodiments, flash LIDAR sensor arrangement 3 does not comprise a LIDAR sensor with a rotating element, specifically a rotating mirror. The flash LIDAR sensor arrangement 3 may comprise three or more, preferably 5, 6, 7, 8 or even more low-resolution flash LIDAR sensors (exemplary resolution of a single sensor may be 128 x 32) thereby avoiding the rolling-shutter and scanline artifacts of rotating LIDAR sensors and resulting in a uniformly distributed high resolution point cloud.

As shown in Fig. 3, the output of flash LIDAR sensor 2 is provided to a filtering and projection entity 21. The filtering and projection entity 21 is configured to adapt information provided by the flash LIDAR sensor 2 such that a concatenation or fusion with image information provided by the camera 1 can be performed.

More in detail, the filtering and projection entity 21 provides occlusion filtering. First neighbouring points in the point cloud provided by the flash LIDAR sensor 2 may be connected with edges thus creating a mesh surface. For example, this can be done from the perspective of the flash LIDAR sensor 2 by connecting those points which are neighbouring pixels in the 'depth map' representation of information provided by flash LIDAR sensor 2. After building said edges, the points are projected to a reference plane, preferably, a reference plane associated with camera 1 using the Z-buffer algorithm in order to filter surface occlusions real time. Based on Z-buffer algorithm it is possible to determine which elements of a rendered scene are visible and which are hidden. At the output of the filtering and projection entity 21, at least pixelated depth information is provided which indicates the distance of a scene portion visible from the camera's perspective. Filtering and projection entity 21 may contain intrinsic camera calibration and extrinsic camera-LIDAR calibration thus compensating any offsets of a certain pixel of image information and pixelated depth information provided by flash LIDAR sensor 2. It is worth mentioning, that the resolution of pixelated depth information is different to the resolution of image information provided by camera 1.

The camera 1 may provide pixelated image information comprising RGB information for each pixel. Said image information is concatenated or fused with depth information provided at the output of filtering and projection entity 21 using a concatenating entity 22. The concatenating entity 22 may provide at its output image information and depth information in different channels. Preferably, image information is provided in three channels and depth information is provided in a separate single channel.

The output of concatenating entity 22 is provided to a first neural network NN1 which - after the training phase - is configured to establish depth prediction information.

As already mentioned before, first neural network NN1 performs supervised algorithm and self-supervised algorithm and provides depth prediction information based on the results of said supervised algorithm and said self-supervised algorithm.

Supervised algorithm uses image information of the camera 1 and depth information derived from the output of flash LIDAR sensor 2 for depth prediction. As shown in Fig. 2, depth information of flash LIDAR sensor 2 is only available in second coverage area B. Therefore, supervised algorithm only provides depth information in said second coverage area B. In said second coverage area B, supervised algorithm also predicts depth information based on information included in image information. Said predicted depth information is additionally corrected based on depth information available from flash LIDAR sensor 2. Thereby, in second coverage area B, deviations between predicted depth information and depth information obtained from flash lidar sensor 2 can be mitigated. Due to the availability of image information of camera 1 and depth information of LIDAR sensor 2, depth information provided by supervised algorithm has a high accuracy but is limited to second coverage area B.

Supervised algorithm is trained based on ground truth information provided by flash lidar sensor arrangement 3, as explained further below. Ground truth information provided by flash lidar sensor arrangement 3 may comprise depth information with a greater resolution than resolution of flash LIDAR sensor 2.

The training of self-supervised algorithm can be obtained in in two different ways. In a first way, self-supervised algorithm is trained solely based on consecutive frames of image information of the camera 1, i.e. not using depth information obtained from flash LIDAR sensor 2.

In the second way, training is established based on consecutive frames of image information and the information provided by flash LIDAR sensor 2 (e.g. sparse, narrow field-of-view depth information), but without any dense ground information supervision from flash LIDAR sensor arrangement 3. Thus, in the second way of training, said training is only a self-supervised training but no supervised training.

Self-supervised algorithm provides depth estimation over the whole image information provided by the camera, i.e. in first coverage area A. Self-supervised algorithm uses the change in RGB image information from at least two time frames, preferably, subsequent time frames. Optionally, also information provided by flash LIDAR sensor 2 (e.g. sparse, narrow field-of-view depth information) may be used for establishing depth estimation by said self-supervised algorithm. Again, reference is made to Fangchang Ma, Guilherme Venturelli Cavalheiro, Sertac Karaman, "Self-Supervised Sparse-to-Dense: Self-Supervised Depth Completion from LiDAR and Monocular Camera", ICRA 2019, which describes methods for vision-only depth prediction.

The self-supervised learning method of upper-mentioned referenced paper may be extended with structural similarity index calculated between consecutive image frames, besides the paper's use of photometric loss. The structural similarity extension enhances depth prediction using information of a flash LIDAR sensor 2 instead of a rotating LIDAR sensor as used in referenced paper because, in contrary to a rotating LIDAR sensor, a flash LIDAR sensor does not provide depth information over the whole horizontal field of view of camera 1. Structural similarity calculation extension makes it possible to make a more accurate warping between two image frames even in large areas missing both input of flash LIDAR sensor 2 and also dense ground truth provided by flash LIDAR sensor arrangement 3.

Self-supervised algorithm may provide predicted depth information for each pixel of image information. However, said depth prediction of self-supervised algorithm, taken in isolation, may suffer from poor accuracy.

In order to obtain depth prediction information from first neural network NN1, in the training phase, self-supervised scene structure loss and supervised scene structure loss is calculated.

In the training phase, the coefficients of neural network NN1 are gradually changed such that supervised scene structure loss and self-supervised scene structure loss are simultaneously improved thereby establishing shared coefficients of neural network providing a shared optimum between supervised scene loss and self-supervised scene structure loss. In other words, coefficients of neural network NN1 are adapted such that supervised scene structure loss and self-supervised scene structure loss are commonly reduced and therefore indicate that the prediction result of self-supervised algorithm and supervised algorithm are commonly reduced.

Said change of coefficients based on considering supervised scene structure loss and self-supervised scene structure loss has the technical effect, that differences between depth predictions of self-supervised algorithm and supervised algorithm are reduced. Descriptively spoken, by choosing shared coefficients of neural network NN1 to obtain a shared optimum, depth predictions of self-supervised algorithm covering first coverage area A is stretched and/or calibrated such that depth predictions provided by self-supervised algorithm is equal or essentially equal to depth predictions provided by supervised algorithm for second coverage area B. It is worth mentioning that said choosing of coefficients according to a common optimum is not limited to said second coverage area but is also effective outside said second coverage area B, specifically over the whole first coverage area A.

Self-supervised scene structure loss is calculated by using structural similarity and photometric loss between consecutive RGB image frames from camera 1 in all of area A, with warping between the two frames optionally aided by sparse input from flash LIDAR sensor 2 but without using any ground truth supervision from flash LIDAR sensor arrangement 3. Said scene structure content may be, for example edges, neighbourhood and/or structural similarity.

Preferably, self-supervised scene structure loss calculation may comprise a weighted combination of photometric loss and structural similarity.

For example, self-supervised loss SSL may be calculated by the following formula:

$$ SSL = w_1 \cdot PL + w_s \cdot (1 - SSIM) $$

wherein

PL is photometric loss,
SSIM is structural similarity index and
w1, w2 are weighting factors.

Calculation of photometric loss PL is described in detail by Fangchang Ma, Guilherme Venturelli Cavalheiro, Sertac Karaman, "Self-Supervised Sparse-to-Dense: Self-Supervised Depth Completion from LiDAR and Monocular Camera", ICRA 2019, which is incorporated by reference. Structural Similarity Index SSIM is also calculated between the original and warped image like Photometric Loss's inputs. Calculation of Structural Similarity Index SSIM is described in detail by Wang, Zhou; Bovik, A.C.; Sheikh, H.R.; Simoncelli, E.P. (2004-04-01). "Image quality assessment: from error visibility to structural similarity". IEEE Transactions on Image Processing. 13 (4): 600-612, which is incorporated by reference.

The weight terms $w_1$, $w_2$ are hyperparameters and should be optimized for the training.

For minimizing supervised scene structure loss, the output of flash lidar sensor arrangement 3 may be modified in order to enable a comparison of supervised scene information and ground truth information provided by flash lidar sensor arrangement 3.

As shown in Fig. 3, the output of flash lidar sensor arrangement 3 may be synchronized with information provided by the camera 1. Specifically, frame synchronization between frames of the camera 1 and frames of flash lidar sensor arrangement 3 may be performed. In addition, occlusion filtering may be performed. Said occlusion filtering may be performed similarly as described above in connection with filtering and projection entity 21. Finally, the outputs of said multiple flash LIDAR sensors of the flash lidar sensor arrangement 3 may be merged and transformed into a common reference plane, preferably the reference plane of the camera 1.

As further shown in Fig. 3, for drivable object determination, depth prediction information provided by first neural network NN1 may be concatenated with image information provide by camera 1 using concatenating entity 23. Said concatenating entity 23 may receive depth prediction information in a first channel and image information in three further channels (e.g. RGB channels). The concatenating entity 23 may further perform an adaption of information to be concatenated or merged, if necessary.

According to embodiments, concatenating entity 23 may further receive reflectance information from flash LIDAR sensor 2 in a further channel. Said reflectance information may include information which is suitable for classifying the object in different object types. For example, based on reflectance information, the size of the object, the material of the object (e.g. stone, metal, etc.) and/or surface texture (e.g. smooth, rough etc.) can be determined.

After concatenating depth prediction information, image information of the camera 1 and preferably also reflectance information, concatenated information is provided to a second neural network NN2. The second neural network NN2 is configured to decide if the vehicle can pass a detected object (traversable object) or not (non-traversable object) and therefore emergency braking is necessary.

The training of first and second neural network NN1, NN2 is performed separately, i.e. second neural network NN2 is trained after finishing training of first neural network NN1. During training, the decisions made by second neural network NN2 are compared with annotations available in ground truth information and the classification loss between the output of second neural network NN2 and ground truth information is minimized.

First neural network NN1 may comprise an encoder-decoder structure. The second neural network NN2 may comprise a convolutional encoder backbone, which may be similar to neural networks which are used for object detection.

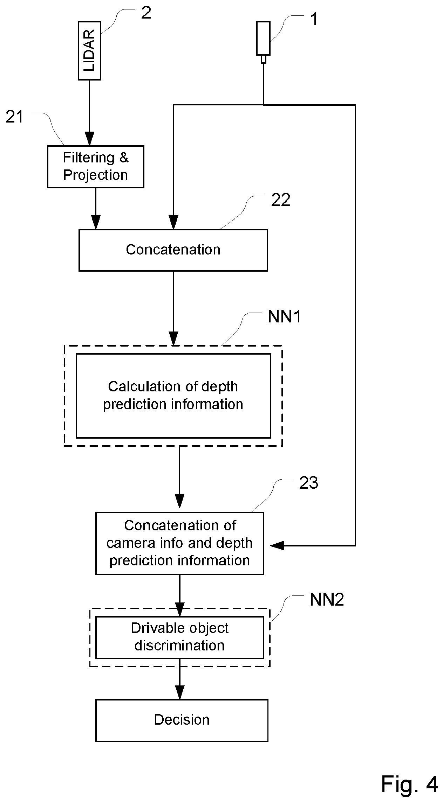

Fig. 4 shows a schematic block diagram of a system for drivable object discrimination in inference time setup, i.e. within a production car where no ground truth information is available from said flash LIDAR sensor arrangement 3 and said first and second neural networks NN1, NN2 are already trained.

As described in connection with fig. 3, the output of flash LIDAR sensor 2 is provided to filtering and projection entity 21 and concatenated with image information provided by the camera 1 in concatenating entity 22.

The output of concatenating entity 22 is provided to the first, trained neural network NN1 which calculates depth prediction information.

Said depth prediction information is than provided to a further concatenating entity 23 which concatenates depth prediction information with image information of the camera 1 (e.g. three channels RGB of camera 1) and preferably reflectance information of the flash LIDAR sensor 2.

The output of further concatenating entity 23 is than provided to the second, trained neural network NN2 which provides object discrimination according to traversable and non-traversable objects.

For further details, reference is made to more detailed description above in connection with Fig. 3.

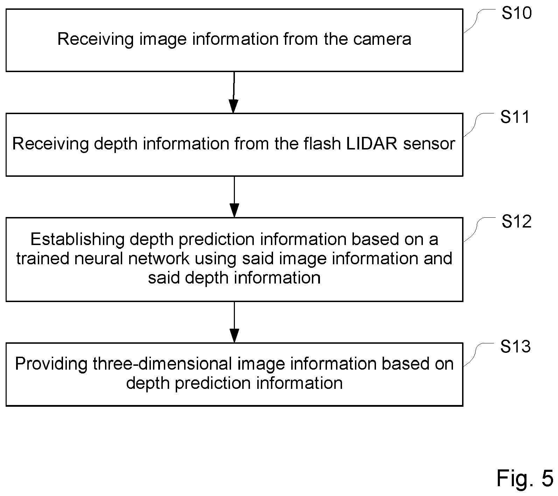

Fig. 5 shows a block diagram illustrating the method steps of a method for determining three-dimensional image information based on depth prediction information.

As a first step, image information is received from the camera (S10). Said image information refers to a first coverage area A.

In addition, depth information from the flash LIDAR sensor 2 is received (S11). Said LIDAR depth information refers to a second coverage area B which is smaller than said first coverage area A. The first and second coverage areas A, B are overlapping with each other.

As a further step, depth prediction information is based on a trained neural network using said image information and said depth information (S12). The neural network implements two different depth prediction algorithms, namely a self-supervised algorithm and a supervised algorithm. The trained neural network uses a set of coefficients that are chosen during training such that a shared optimum between prediction accuracy of supervised algorithm and prediction accuracy of self-supervised algorithm is obtained.

Finally, three-dimensional image information is provided based on depth prediction information (S13).

It should be noted that the description and drawings merely illustrate the principles of the proposed invention. Those skilled in the art will be able to implement various arrangements that, although not explicitly described or shown herein, embody the principles of the invention.

**List of reference numerals**

1   camera
2   flash LIDAR sensor
3   flash LIDAR sensor arrangement

10   road

11   small pothole
12   great pothole
13   sheet of paper
14   rocks

20   system
21   filtering and projection entity
22   concatenating entity
23   concatenating entity

A    first coverage area
B    second coverage area
NN1  first neural network
NN2  second neural network

**Claims**

1. Computer-implemented method for determining three-dimensional image information of a scene in the surrounding of a vehicle based on information provided by a camera (1) and a flash LIDAR sensor (2), the method comprising the steps of:

   - Receiving image information from the camera (1), said image information referring to a first coverage area (A) (S10);
   - Receiving depth information from the flash LIDAR sensor (2), the depth information referring to a second coverage area (B) being smaller than said first coverage area (A), said first and second coverage areas (A, B) overlapping with each other (S1 1);
   - Establishing depth prediction information based on a trained neural network (S12), the trained neural network receiving said image information from the camera (1) and said depth information from the flash LIDAR sensor (2) and provides depth prediction information covering first coverage area (A) by combining information provided by a supervised algorithm and self-supervised algorithm executed by said neural network, wherein said trained neural network comprises coefficients being chosen by considering supervised scene structure loss associated with said supervised algorithm and self-supervised scene structure loss associated with said self-supervised algorithm during a training phase such that deviations between depth predictions provided by self-supervised algorithm and depth predictions provided by supervised algorithm are reduced; and
   - Providing three-dimensional image information based on depth prediction information (S13).

2. Method according to claim 1, wherein said trained neural network comprises coefficients which are chosen such that supervised scene structure loss and self-supervised scene structure loss are simultaneously improved thereby establishing shared coefficients of neural network providing a shared optimum between supervised scene loss and self-supervised scene structure loss.

3. Method according to claim 1 or 2, wherein said self-supervised algorithm performs a vision-only depth estimation solely based on features included in said image information or performs a depth estimation algorithm which uses solely image information from the camera (1) in the subarea of first coverage area (A) which does not overlap with second coverage area (B) and which uses image information from the camera (1) and depth information from the flash LIDAR sensor (2) in second coverage area (B).

4. Method according to anyone of preceding claims, wherein said self-supervised algorithm performs depth estimation by considering information included in said image information provided by the camera (1) using photometric loss and structural similarity.

5. Method according to anyone of preceding claims, wherein supervised algorithm provides depth predictions based on said image information received from the camera (1) and depth information provided by the flash LIDAR sensor (2) in second coverage area (B).

6. Method according to anyone of preceding claims, wherein the output of flash LIDAR sensor (2) is provided through an occlusion filtering entity before concatenating the output of flash LIDAR sensor (2) with image information provided by the camera (1).

7. Method according to anyone of preceding claims, wherein the output of flash LIDAR sensor (2) is projected to a reference plane associated with the camera (1) based on Z-buffer-algorithm.

8. Method according to anyone of preceding claims, comprising the step of determining obstacles or objects in the surrounding of the vehicle based on depth prediction information and image information provided by the camera (1) using a further neural network.

9. Method according to claim 8, wherein the step of determining obstacles or objects in the surrounding of the vehicle comprises classifying the obstacles or objects into traversable and non-traversable obstacles or objects.

10. Method according to claim 8 or 9, wherein the step of determining obstacles or objects in the surrounding of the vehicle is additionally based on reflectance information provided the flash LIDAR sensor (2).

11. Method according to anyone of the preceding claims, wherein the neural network configured to provide depth prediction information is trained based on ground truth information provided by a flash LIDAR sensor arrangement (3) comprising multiple flash LIDAR sensors.

12. Method according to claim 11, wherein during training of said neural network, pixel-wise root mean square error is calculated based on depth predictions provided by supervised algorithm and ground truth information provided by said flash LIDAR sensor arrangement (3).

13. Method according to anyone of preceding claims, wherein during training of said neural network which provides depth prediction information, a self-supervised scene structure loss is calculated by considering photometric loss and structural similarity.

14. Method according to anyone of the preceding claims 11 to 13 referring back to claim 8, wherein the further neural network configured for determining obstacles or objects in the surrounding of the vehicle based on depth prediction information and image information provided by the camera (1) is trained by reducing classification loss based on ground truth information provided by said flash LIDAR sensor arrangement (3).

15. System for determining three-dimensional image information of a scene in the surrounding of a vehicle comprising a camera (1) and a flash LIDAR sensor (2), the system being configured to perform the steps of:

    - Receiving image information from the camera (1), said image information referring to a first coverage area (A);
    - Receiving depth information from the flash LIDAR sensor (2), the depth information referring to a second coverage area (B) being smaller than said first coverage area (A), said first and second coverage areas (A, B) overlapping with each other;
    - Establishing depth prediction information based on a trained neural network, the trained neural network receiving said image information from the camera (1) and said depth information from the flash LIDAR sensor (2) and provides depth prediction information covering first coverage area (A) by combining information provided by a supervised algorithm and self-supervised algorithm executed by said neural network, wherein said trained neural network comprises coefficients being chosen by considering supervised scene structure loss associated with said supervised algorithm and self-supervised scene structure loss associated with said self-supervised algorithm during a training phase such that deviations between depth predictions provided by self-supervised algorithm and depth predictions provided by supervised algorithm are reduced; and

- Providing three-dimensional image information based on depth prediction information.

10

11

12

13

14

Fig. 1

A

B

supervised scene
information

self-supervised scene information

Fig. 2

Fig. 3

Fig. 4

Receiving image information from the camera — S10

Receiving depth information from the flash LIDAR sensor — S11

Establishing depth prediction information based on a trained neural network using said image information and said depth information — S12

Providing three-dimensional image information based on depth prediction information — S13

Fig. 5

Europäisches
Patentamt

European
Patent Office

Office européen
des brevets

# EUROPEAN SEARCH REPORT

Application Number

EP 20 18 8984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/295282 A1 (SMOLYANSKIY NIKOLAI [US] ET AL) 26 September 2019 (2019-09-26) * paragraphs [0027] - [0091] * ----- | 1-15 | INV. G01S17/89 G01S17/894 G01S17/86 |
| A | WO 2020/140049 A1 (NVIDIA CORP [US]) 2 July 2020 (2020-07-02) * pages 37,38 * ----- | 1-15 | G06N3/08 |
| A | KEISUKE TATENO ET AL: "CNN-SLAM: Real-time dense monocular SLAM with learned depth prediction", ARXIV.ORG, CORNELL UNIVERSITY LIBRARY, 201 OLIN LIBRARY CORNELL UNIVERSITY ITHACA, NY 14853, 11 April 2017 (2017-04-11), XP080762383, DOI: 10.1109/CVPR.2017.695 * the whole document * ----- | 1-15 | |
| A | Fangchang Ma ET AL: "Self-Supervised Sparse-to-Dense: Self-Supervised Depth Completion from LiDAR and Monocular Camera", Later in: 2019 International Conference on Robotics and Automation (ICRA), 3 July 2018 (2018-07-03), XP055655795, DOI: 10.1109/ICRA.2019.8793637 Retrieved from the Internet: URL:https://arxiv.org/abs/1807.00275 [retrieved on 2020-01-08] * the whole document * ----- | 1-15 | TECHNICAL FIELDS SEARCHED (IPC) G01S G06N |

-/--

The present search report has been drawn up for all claims

| Place of search | Date of completion of the search | Examiner |
|---|---|---|
| Munich | 19 January 2021 | Damp, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 18 8984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BOVIK A C ET AL: "Image Quality Assessment: From Error Visibility to Structural Similarity", IEEE TRANSACTIONS ON IMAGE PROCESSING, IEE SERVICE CENTER , PISCATAWAY , NJ, US, vol. 13, no. 4, 1 April 2004 (2004-04-01), pages 600-612, XP011110418, ISSN: 1057-7149, DOI: 10.1109/TIP.2003.819861 * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 19 January 2021 | Damp, Stephan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 18 8984

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2021

| Patent document cited in search report | Publication date | Patent family member(s) | Publication date |
|---|---|---|---|
| US 2019295282 A1 | 26-09-2019 | US 2019295282 A1<br>WO 2019182974 A2 | 26-09-2019<br>26-09-2019 |
| WO 2020140049 A1 | 02-07-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FANGCHANG MA ; GUILHERME VENTURELLI CAVALHEIRO ; SERTAC KARAMAN.** Self-Supervised Sparse-to-Dense: Self-Supervised Depth Completion from LiDAR and Monocular Camera. *ICRA,* 2019

- **WANG ; ZHOU ; BOVIK, A.C. ; SHEIKH, H.R. ; SIMONCELLI, E.P.** Image quality assessment: from error visibility to structural similarity. *IEEE Transactions on Image Processing,* 01 April 2004, vol. 13 (4), 600-612